# EUROPÄISCHE PATENTANMELDUNG

(11) **EP 1 987 867 A2**
(43) Veröffentlichungstag der Anmeldung: **05.11.2008**
(21) Anmeldenummer: 08006980.0
(22) Anmeldetag: 08.04.2008
(51) Int. Cl.: B01D 3/00

(54) **Sammler-Verteiler-Kombination**

(30) Priorität: 26.04.2007 DE 102007019816
(71) Anmelder: Linde Aktiengesellschaft, 80807 München (DE)
(72) Erfinder: Alzner, Gerhard, 81476 München (DE); Bauer, Ludwig, 82065 Baierbrunn (DE)

(57) **Zusammenfassung**

Die Erfindung beschreibt eine Sammler-Verteiler-Kombination in einer Kolonne (2), die mit einer regellosen Füllkörperschüttung oder mit einer strukturierten Packung befüllt ist. Die flüssige Phase wird über einen Sammler (40) mit geneigten Ebenen (41) zu einer zentralen Öffnung (42) geführt, die mit einem Steigrohr (31) verbunden ist, von wo aus sich die flüssige Phase über die Verteilerrohre (32, 33) auf die darunter liegende Ebene verteilt. Durch die Gewährleistung eines ständigen Füllstandes der flüssigen Phase im Steigrohr (31) funktioniert der Verteiler (30) als Druckverteiler. Die flüssige Phase wird unabhängig von der Neigung der Kolonne (2) über die gesamte Länge der Verteilerrohre (32, 33) verteilt. Die gasförmige Phase passiert den Sammler (40) über die Kamine (50).

## Beschreibung

Die Erfindung betrifft eine Sammler-Verteiler-Kombination für eine gasförmige und eine flüssige Phase in einer Kolonne.

Kolonnen, die mit einer regellosen Füllkörperschüttung oder mit einer strukturierten Packung gefüllt sind, haben zahlreiche Anwendungsmöglichkeiten in Anlagen der petrochemischen Industrie. Häufig werden derartige Kolonnen zur Trennung von Stoffgemischen genutzt, wobei eine gasförmige Phase über den Kopf der Kolonne und eine flüssige Phase über den Boden der Kolonne abgezogen wird. Die regellosen Füllkörperschüttungen und die strukturierten Packungen im Inneren der Kolonne dienen zur Verbesserung der Wechselwirkung zwischen der gasförmigen und der flüssigen Phase. Für die optimale Funktionsfähigkeit der Kolonne müssen daher sowohl die flüssige als auch die gasförmige Phase gleichmäßig über das gesamte Volumen und damit über den gesamten Querschnitt der Kolonne verteilt werden.

Eine Kolonne nach dem Stand der Technik verfügt über eine oder mehrere Sammler- und Verteilereinrichtungen, die über die gesamte Kolonne verteilt sind. Derartige Kolonnen werden nach dem Stand der Technik hauptsächlich an Land im sog. On-Shore-Betrieb verwendet. In einer derartigen Kolonne nach dem Stand der Technik sind die Flüssigkeits-Sammler und -Verteiler in der Regel als offene Gerinne, Tröge oder Sammelschienen ausgeführt.

Die Flüssigkeits-Sammler und -Verteiler nach dem Stand der Technik werden über die gesamte Höhe der senkrecht ausgerichteten Kolonne verteilt und waagerecht eingebaut. Die flüssige Phase benetzt die regellosen Füllkörperschüttungen oder die strukturierten Packungen, mit denen die Kolonne befüllt ist und fließt, angetrieben durch die Schwerkraft, abwärts. Die gasförmige Phase bewegt sich aufwärts. Dadurch, dass beide Phasen gezwungen sind, sich durch eine Vielzahl enger Kanäle zu bewegen, wird die Wechselwirkung zwischen beiden Phasen erhöht. Zwischen zwei derartigen Füllungsebenen befindet sich nach dem Stand der Technik ein Flüssigkeits-Sammler und -Verteiler. Die Flüssigkeit tropft durch Schwerkraft in den Sammler, wird von dort zum Verteiler geführt und im Verteiler über den gesamten Querschnitt der nächstliegenden Füllungsebene verteilt. Nach dem Stand der Technik sind derartige Verteiler häufig als offene Gerinne (U-Profile) mit Löchern ausgeführt, die sich über den gesamten Querschnitt der Kolonne verteilen. Der Zwischenraum zwischen den offenen Gerinnen dient dem Durchlass der gasförmigen Phase. Um die flüssige Phase aus diesen Durchlässen herauszuhalten, werden die Durchlässe im Stand der Technik häufig überdacht. Diese Flüssigkeitsverteiler, die nach dem Prinzip eines offenen Schwerkraft-Verteilers arbeiten, haben sich beim Einsatz von an Land befindlichen, senkrecht ausgerichteten Kolonnen bewährt.

Für einen Einsatz unter Off-Shore-Bedingungen, wie sie z.B. auf einem Schiff herrschen, sind die im Stand der Technik beschriebenen Flüssigkeits-Sammler und -Verteiler nicht geeignet. Im Off-Shore-Betrieb unterliegt die Kolonne beständig Bewegungen, die sie aus ihrer senkrechten Orientierung bringen. Im ungünstigsten Fall kann es zu einer Schräglage von mehreren Graden der Kolonne gegenüber der Senkrechten über einen längeren Zeitraum kommen. Bei einem derartigen Einsatz der offenen Schwerkraft-Verteilersysteme nach dem Stand der Technik kann es passieren, dass die Flüssigkeit bei der Schräglage der Kolonne den tiefsten Punkt des Sammler- und Verteiler-Systems nicht erreicht und somit die Benetzung der Füllkörper/Packungen nur unzureichend erfolgt, wodurch die Funktion der Kolonne nicht mehr erfüllt werden kann.

Der vorliegenden Erfindung liegt daher die Aufgabe zugrunde, eine Sammler-Verteiler-Kombination derart auszugestalten, dass Sammlung und Verteilung der gasförmigen und der flüssigen Phase auch bei einer Schräglage von mehreren Graden der Kolonne gewährleistet ist.

Die vorliegende Aufgabe wird dadurch gelöst, dass der Verteiler für die flüssige Phase als Druckverteiler für die flüssige Phase und/oder der Sammler für die flüssige Phase als Druckverteiler für die gasförmige Phase ausgestaltet sind.

Durch die erfindungsgemäße Ausgestaltung der Verteiler als Druckverteiler wird die Verteilung unabhängig von der Schwerkraft und der Schräglage der Kolonne gewährleistet. Die Ausgestaltung als Druckverteiler setzt die flüssige Phase und/oder die gasförmige Phase derart unter Druck, dass sich die jeweilige Phase über den gesamten Verteiler ausbreitet. Damit gelingt es, die jeweilige Phase über den gesamten Querschnitt der Kolonne zu verteilen. Eine Ansammlung der jeweiligen Phase in einem Areal des Querschnittes der Kolonne wird vermieden. Der Druck im Verteiler sorgt dafür, dass sich die jeweilige Phase auch bei nicht senkrechter Ausrichtung der Kolonne gegen die Schwerkraft über den gesamten Querschnitt der Kolonne verteilt.

In einer bevorzugten Ausgestaltung der Sammler-Verteiler-Kombination weist der Sammler für die flüssigen Phase Mittel auf, die geeignet sind, die flüssige Phase zu einer zentralen Öffnung zu leiten, welche über ein Steigrohr mit dem Verteiler für die flüssige Phase verbunden ist. Zweckmäßigerweise weist das Steigrohr einen vieleckigen, bevorzugt rechteckigen, oder runden, bevorzugt ovalen, besonders bevorzugt kreisförmigen, Querschnitt auf, welcher von seiner Größe geeignet ist, Gasblasen gegen die Strömung der flüssigen Phase aufsteigen zu lassen. Der Verteiler für die flüssige Phase besteht vorteilhafterweise aus mindestens einem mit dem Steigrohr verbundenen Verteilerrohr, von dem mindestens ein weiteres Verteilerrohr abzweigen kann, wobei die Verteilerrohre einen beliebigen vieleckigen oder runden Querschnitt und Öffnungen für die flüssige Phase auf der Unterseite aufweisen.

Als Mittel zur Führung der flüssigen Phase zu einer zentralen Öffnung im Sammler kommen vor allem geneigte, ebene Flächen in Betracht. Dabei weisen die ebenen Flächen vorteilhafterweise eine Neigung auf, welche deutlich größer als die erwartete maximale Schräglage der Kolonne ist. Somit bleibt im Sammler auch bei maximaler Schräglage der Kolonne immer noch ein Restgefälle, durch welches die flüssige Phase zur zentralen Öffnung geführt wird. Durch das, mit der zentralen Öffnung verbundenem, Steigrohr wird die flüssige Phase unabhängig von der Schräglage der Kolonne in das Verteilersystem mit den Verteilerrohren geleitet. Die Dimensionierung des Steigrohrs ist dabei so zu wählen, dass einerseits für Gasblasen innerhalb des Flüssigkeits-Verteiler-Systems die Möglichkeit besteht, durch das Steigrohr aufzusteigen, und andererseits ein beständiger Füllstand der flüssigen Phase im Steigrohr gewährleistet ist. Durch den beständigen Füllstand der flüssigen Phase im Steigrohr baut sich über das gesamte Verteilersystem aus Steigrohr und Verteilerrohren ein Druck auf, welcher eine Verteilung der flüssigen Phase über die gesamte Länge der geschlossenen Verteilerrohre und somit über den gesamten Querschnitt der Kolonne gewährleistet. Der Druck im Verteilersystem verteilt die flüssige Phase auch gegen die Schwerkraft. Die Verteilerrohre des Verteilers sind zweckmäßigerweise über den gesamten Querschnitt der Kolonne gleichmäßig verteilt. Über die Öffnungen auf der Unterseite der Verteilerrohre tritt die flüssige Phase gleichmäßig auf den gesamten Querschnitt der nächsten Füllkörperebene aus.

Vorteilhafterweise ist der Sammler für die flüssige Phase auch als Verteiler für die gasförmige Phase geeignet. Der Sammler für die flüssige Phase weist zweckmäßigerweise mindestens einen Kamin für die gasförmige Phase auf, wobei der Kamin einen beliebigen vieleckigen oder runden Querschnitt und ein über den Querschnitt des Kamins hinausgehendes Dach oder eine über den Querschnitt des Kamins hinausgehende Haube aufweist. Besonders bevorzugt werden mehrere Kamine gleichmäßig über die Fläche des Sammlers der flüssigen Phase verteilt.

Durch die bevorzugte Ausgestaltung des Sammlers für die flüssige Phase als geneigte Fläche über den gesamten Querschnitt der Kolonne staut sich die gasförmige Phase unterhalb des Sammlers. Die gasförmige Phase kann den Sammler nur über die über den Querschnitt verteilten Kamine passieren. Der Druckverlust, den die gasförmige Phase durch das Durchströmen der Kamine erfährt, sorgt für eine gleichmäßige Verteilung der gasförmigen Phase unterhalb des nächst höheren Füllabschnittes. Der Sammler für die flüssige Phase dient somit vorteilhafterweise als Druckverteiler für die gasförmige Phase. Durch die vorteilhafte Ausstattung der Kamine mit Dächern oder Hauben, die über den Querschnitt der Kamine hinausgehen, wird ein Eindringen der flüssigen Phase in die Kamine vermieden und die Kamine werden somit für die gasförmige Phase offen gehalten.

In einer anderen Ausgestaltung der Erfindung besteht der Verteiler für die flüssige Phase aus einem flachen, geschlossenen Zylinder mit Öffnungen für die flüssige Phase auf der Unterseite, wobei sich die Grundfläche des Zylinders über den gesamten Querschnitt der Kolonne erstreckt und der Zylinder mindestens einen durch ihn durchgehende Kamin zum Gasdurchlass aufweist. Auch in dieser Ausgestaltung des Verteilers als flachen, geschlossenen Zylinder funktioniert der Verteiler als Druckverteiler und die flüssige Phase wird über den gesamten Querschnitt der Kolonne verteilt. Um gleichzeitig die Durchlässigkeit des Verteilers für die gasförmige Phase zu gewährleisten, weist der Verteiler analog zum Sammler einen oder mehrere gleichmäßig über den Querschnitt verteilte Kamine auf.

In einer weiteren Ausgestaltung der Erfindung weist der Sammler für die flüssige Phase Mittel auf, die die flüssige Phase in Teilen zu einer zentralen Öffnung leiten, welche über ein Steigrohr mit dem Verteiler für die flüssige Phase verbunden ist, und die flüssige Phase in Teilen zu einer Öffnung an der Kolonnenaußenseite leiten, durch welche dosiert eine bestimmte Menge der Flüssigkeit aus der Kolonne ausgeführt werden kann. In dieser Ausgestaltung der Erfindung wird das Steigrohr zweckmäßigerweise über die zentrale Öffnung des Sammlers hinausgeführt.

In zahlreichen Anwendungen ist es notwendig, an verschiedenen Punkten über die Kolonnenhöhe Flüssigkeit in einer definierten Menge aus der Kolonne auszuführen. Dies wird in dieser Ausgestaltung der Erfindung vorteilhafterweise mit dem Sammler für die flüssige Phase kombiniert. Der Sammler wird derart konstruiert, dass die flüssige Phase zu zwei Punkten, der zentralen Öffnung und der seitlichen Entnahme für die flüssige Phase, geleitet wird. An der seitlichen Öffnung der Kolonne befindet sich dabei zweckmäßigerweise eine schalenartige Vertiefung im Sammler. Die Verteilung der Menge der flüssigen Phase zwischen der zentralen Öffnung und der seitlichen Öffnung zum Abzug der flüssigen Phase wird dabei durch die Höhe reguliert, die das Steigrohr über die zentrale Öffnung des Sammlers hinausgeführt wird.

Mit der vorliegenden Erfindung gelingt es insbesondere, eine gleichmäßige Verteilung der flüssigen und gasförmigen Phase in einer Kolonne über den gesamten Querschnitt der Kolonne auch bei Bewegung der Kolonne oder bei einer Aufstellung mit einer Neigung gegenüber der senkrechten Lage zu gewährleisten.

Im Folgenden soll die Erfindung anhand dreier Ausführungsbeispiele der Sammler-Verteiler-Kombination näher erläutert werden.

Es zeigen:
- **Figur 1**: eine Ausgestaltung des Sammlers als Trichter
- **Figur 2**: eine Ausgestaltung mit einem Sammler aus mehreren geneigten Ebenen
- **Figur 3**: eine Ausgestaltung der Sammler-Verteiler-Kombination mit einer seitlichen Öffnung zum Abzug der flüssigen Phase.

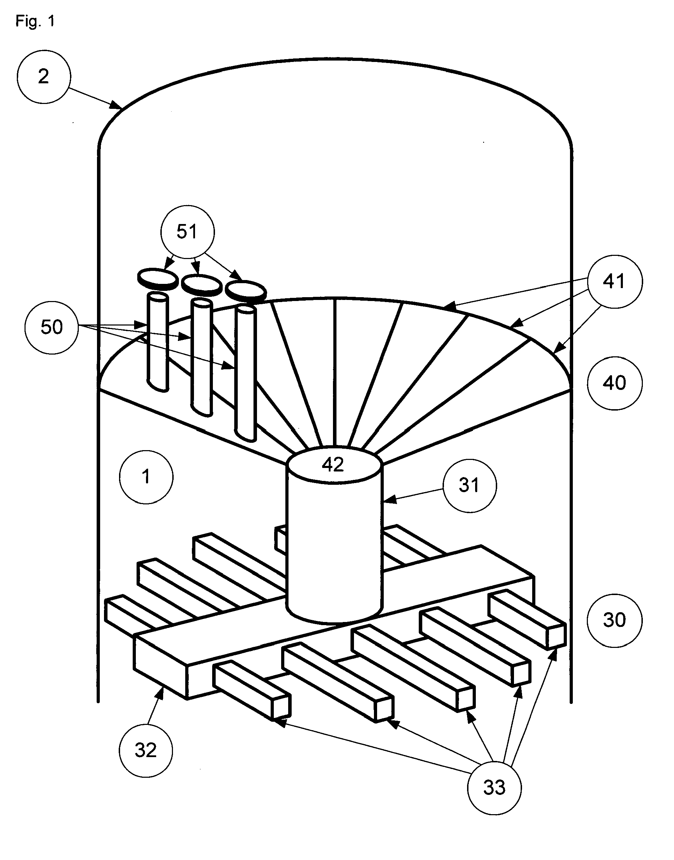

**Figur 1** zeigt eine Ausgestaltung der erfindungsgemäßen Sammler-Verteiler-Kombination (1) in einer Kolonne (2). Die Flüssigkeit tritt aus der oberen Schüttungsebene aus und trifft auf den Sammler (40) der aus mehreren Segmenten (41) zusammengesetzt ist und die Form eines Trichters bildet. Die Neigung der Segmente (41) gegenüber der Horizontalen ist derart, dass sich auch bei maximaler Schräglage der Kolonne (2) ein Gefälle an jedem Punkt des Sammlers (40) ergibt. Durch den Sammler (40) wird die flüssige Phase zur zentralen Öffnung (42) geleitet. Der Sammler (40) ist an der zentralen Öffnung (42) mit einem Steigrohr (31) verbunden, welches mit einem zentralen Verteilerrohr (32) mit mehreren weiteren Verteilerrohren (33) verbunden ist. Die Verteilerrohre (32, 33) sind über den gesamten Querschnitt der Kolonne (2) verteilt und weisen unterseitig ebenfalls über den gesamten Querschnitt der Kolonne (2) verteilte Öffnungen auf. Die Dimensionen von Steigrohr (31) und der Verteilerrohre (32, 33) sind so gewählt, dass sich in Kombination mit dem Querschnitt der Öffnungen der Verteilerrohre (32, 33) ein permanenter Füllstand der flüssigen Phase im Steigrohr (31) ergibt. Durch den permanenten Füllstand der flüssigen Phase im Steigrohr (31) steht die flüssige Phase im gesamten Verteilersystem aus Steigrohr (31) und Verteilerrohren (32, 33) permanent unter Druck. Dadurch wird die flüssige Phase unabhängig von der Neigung der Kolonne (2) gegenüber der Senkrechten über die gesamte Länge der Verteilerrohre (32, 33) verteilt und tritt somit gleichmäßig über die Öffnungen auf der Unterseite der Verteilerrohre über den gesamten Querschnitt auf die darunter liegende Füllkörper- bzw. Packungslage aus. Die zwischen den Verteilerrohren (32, 33) von unten nach oben strömende gasförmige Phase staut sich unterhalb des Sammlers (40) und durchdringt diesen mittels der Kamine (50). Die Kamine sind über den gesamten Querschnitt des Sammlers (40) verteilt (nicht dargestellt) und mit einem Dach (51) ausgestattet, um ein Eindringen der flüssigen Phase aus der oberen Füllkörper- bzw. Packungslage in die Kamine für den Gasdurchlass zu verhindern. Der Druckverlust, den die gasförmige Phase beim Durchströmen der Kamine (50) erfährt, sorgt in Kombination mit den Dächern (51) für eine gleichmäßige Verteilung der gasförmigen Phase über den gesamten Querschnitt der Kolonne (2).

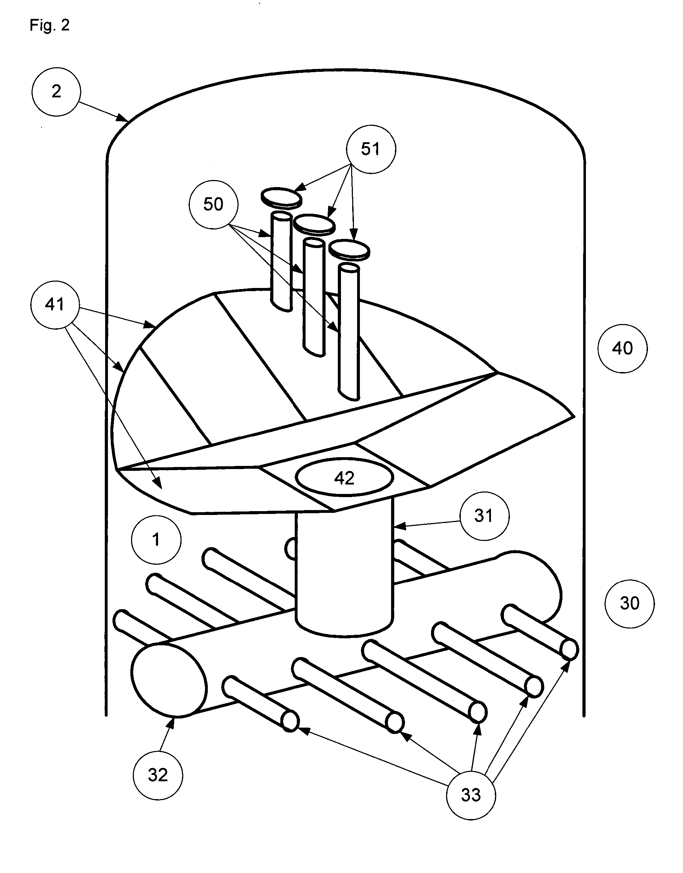

**Figur 2** zeigt eine weitere Ausgestaltung der erfindungsgemäßen Sammler-Verteiler-Kombination. In dieser Ausgestaltung der Erfindung werden die geneigten Ebenen (41) des Sammlers (40) derart kombiniert, dass sich über der zentralen Öffnung (42) ein rechteckiger Schacht ausbildet. Die Verteilerrohre (32, 33) des Verteilers (30) weisen in dieser Ausgestaltung der Erfindung einen runden Querschnitt auf.

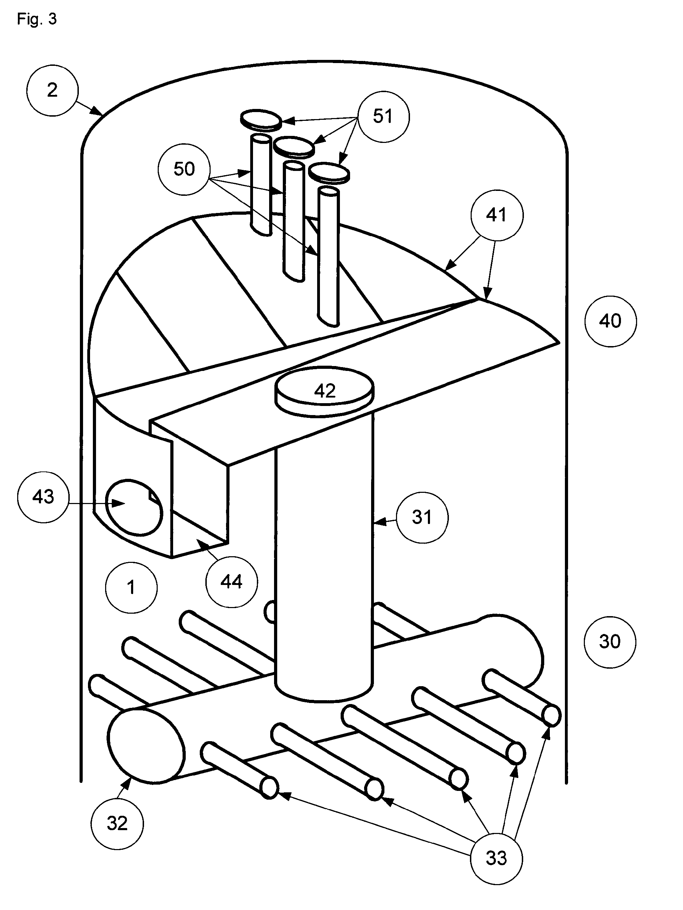

**Figur 3** zeigt eine Ausgestaltung der Erfindung, die eine Öffnung an der Kolonnenaußenseite zum dosierten Abzug der flüssigen Phase aufweist. Die geneigten Ebenen (41) des Sammlers (40) sind derart angeordnet, dass die flüssige Phase sowohl zur zentralen Öffnung (42) als auch zur seitlichen Öffnung (43) geleitet wird. Um die Öffnung (43) zum seitlichen Abzug der flüssigen Phase aus der Kolonne (2) befindet sich ein rechteckiger Schacht (44), um die permanente Verfügbarkeit der flüssigen Phase an der seitlichen Öffnung (43) zu gewährleisten. Die geneigten Ebenen (41) bilden in der Mitte des Querschnittes einen rechteckigen Schacht, in dem die beiden Öffnungen (42, 43) liegen. Die mengenmäßige Verteilung der flüssigen Phase auf die beiden Öffnungen (42, 43) kann durch die Höhe eingestellt werden, die das Steigrohr (31) über die zentrale Öffnung (42) hinausragt. Auch in dieser Ausgestaltung der Erfindung werden der Sammler (40) und der Verteiler (30) derart dimensioniert, dass ein beständiger Füllstand der flüssigen Phase im Steigrohr (31) gewährleistet ist. So funktioniert auch in dieser Ausgestaltung der Erfindung der Verteiler (30) als Druckverteiler und es wird unabhängig von der Neigung der Kolonne (2) gewährleistet, dass sich die flüssige Phase über die gesamte Länge der Verteilerrohre (32, 33) verteilt.

## Patentansprüche

1. Sammler-Verteiler-Kombination (1) für eine gasförmige und eine flüssige Phase in einer Kolonne (2), **dadurch gekennzeichnet, dass** der Verteiler (30) für die flüssige Phase als Druckverteiler für die flüssige Phase und/oder der Sammler für die flüssige Phase als Druckverteiler für die gasförmige Phase ausgestaltet sind.

2. Sammler-Verteiler-Kombination nach Anspruch 1, **dadurch gekennzeichnet, dass** der Sammler (40) für die flüssige Phase Mittel (41) aufweist, die geeignet sind, die flüssige Phase zu einer zentralen Öffnung (42) zu leiten, welche über ein Steigrohr (31) mit dem Verteiler für die flüssige Phase verbunden ist.

3. Sammler-Verteiler-Kombination nach Anspruch 2, **dadurch gekennzeichnet, dass** das Steigrohr (31) einen vieleckigen, bevorzugt rechteckigen, oder runden, bevorzugt ovalen, besonders bevorzugt kreisförmigen, Querschnitt aufweist, welcher von seiner Größe geeignet ist, Gasblasen gegen die Strömung der flüssigen Phase aufsteigen zu lassen.

4. Sammler-Verteiler-Kombination nach einem der Ansprüche 2 bis 3, **dadurch gekennzeichnet, dass** der Verteiler für die flüssige Phase aus mindestens einem mit dem Steigrohr (31) verbundenen Verteilerrohr (32) besteht, von dem mindestens ein weiteres Verteilerrohr (33) abzweigen kann, wobei die Verteilerrohre einen beliebigen vieleckigen oder runden Querschnitt und Öffnungen für die flüssige Phase auf der Unterseite aufweisen.

5. Sammler-Verteiler-Kombination nach einem der Ansprüche 1 bis 4, **dadurch gekennzeichnet, dass** der Sammler (40) für die flüssige Phase als Sammler und Verteiler für die gasförmige Phase geeignet ist.

6. Sammler-Verteiler-Kombination nach einem der Ansprüche 1 bis 5, **dadurch gekennzeichnet, dass** der Sammler (40) für die flüssige Phase mindestens einen Kamin (50) für die gasförmige Phase aufweist, wobei der Kamin einen beliebigen vieleckigen oder runden Querschnitt und eine über den Querschnitt des Kamins hinausgehendes Dach (51) oder eine über den Querschnitt des Kamins hinausgehende Haube aufweist.

7. Sammler-Verteiler-Kombination nach einem der Anspruch 6, **dadurch gekennzeichnet, dass** mehrere Kamine (50) über die Fläche des Sammlers (40) für die flüssige Phase gleichmäßig verteilt sind.

8. Sammler-Verteiler-Kombination nach einem der Ansprüche 1 bis 7, **dadurch gekennzeichnet, dass** der Verteiler für die flüssige Phase aus einem flachen, geschlossenen Zylinder mit Öffnungen für die flüssige Phase auf der Unterseite besteht, wobei sich die Grundfläche des Zylinders über den gesamten Querschnitt der Kolonne erstreckt und der Zylinder mindestens einen durch ihn durchgehenden Kamin (50) zum Gasdurchlass aufweist.

9. Sammler-Verteiler-Kombination nach einem der Ansprüche 1 bis 8, **dadurch gekennzeichnet, dass** der Sammler (40) für die flüssige Phase Mittel (41) aufweist, die flüssige Phase in Teilen zu einer zentralen Öffnung (42) zu leiten, welche über ein Steigrohr (31) mit dem Verteiler (30) für die flüssige Phase verbunden ist, und die flüssige Phase in Teilen zu einer Öffnung (43) an der Kolonnenaußenseite zu leiten, durch welche dosiert eine bestimmte Menge der Flüssigkeit aus der Kolonne ausgeführt werden kann.

10. Sammler-Verteiler-Kombination nach einem der Anspruch 9, **dadurch gekennzeichnet, dass** das Steigrohr (31) über die zentrale Öffnung (42) des Sammlers hinausgeführt wird.
